(19) Europäisches Patentamt
European Patent Office
Office européen des brevets

(11) **EP 2 151 889 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
*H01Q 1/42* (2006.01)     *G01S 13/93* (2006.01)

(21) Anmeldenummer: **09009614.0**

(22) Anmeldetag: **24.07.2009**

(54) **Radom für einen Radarsensor in einem Kraftfahrzeug**

Radome for a radar sensor in a motor vehicle

Radôme pour un capteur radar dans un véhicule automobile

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.08.2008 DE 102008036012**

(43) Veröffentlichungstag der Anmeldung:
**10.02.2010 Patentblatt 2010/06**

(73) Patentinhaber: **Audi AG**
**85045 Ingolstadt (DE)**

(72) Erfinder:
• **Pfeiffer, Florian**
**85567 Grafing (DE)**
• **Biebl, Erwin**
**82110 Germering (DE)**

(74) Vertreter: **Thielmann, Frank**
**AUDI AG**
**Patentabteilung**
**85045 Ingolstadt (DE)**

(56) Entgegenhaltungen:
EP-A- 0 478 852     WO-A-2009/083165
FR-A- 2 560 444     JP-A- 57 065 006
US-A- 3 560 986     US-A1- 2003 128 164

**Beschreibung**

Die Erfindung betrifft ein Radom für einen Radarsensor in einem Kraftfahrzeug. Zudem betrifft die Erfindung einen Radarsensor und ein Kraftfahrzeug.

In Kraftfahrzeugen kommt eine Vielzahl an Fahrerassistenzsystemen zum Einsatz. Als Beispiel seien das Antiblockiersystem, die Verkehrszeichenerkennung und auch Abstandshalteeinrichtungen genannt. Diese Fahrerassistenzsysteme benötigen Daten von Sensoreinrichtungen. Als Sensoreinrichtungen kommen beispielsweise Kameras und auch Radarsensoren zum Einsatz. Ein Problem, das sich bei dieser Vielzahl an Sensoren ergibt, ist ihre Anordnung. Viele Sensoren sind im Frontbereich des Kraftfahrzeugs anzubringen, wobei allerdings ein großer Teil der Frontfläche bereits durch die Windschutzscheibe, die Motorhaube und die Frontscheinwerfer belegt ist. Somit bleiben als freie Flächen die Bereiche hinter dem Stoßfänger, sowie der Bereich hinter dem Kühlerschutzgrill. Aus optischen Gründen ist es dabei wünschenswert, dass die Sensoren hinter dem Stoßfänger bzw. dem Kühlerschutzgrill und damit unsichtbar für den Betrachter angebracht sind.

Insbesondere bei Radarsensoren tritt dabei das Problem auf, dass beispielsweise eine Reduktion der Erstdetektionsreichweite, also des Abstandes, in dem ein vorausfahrendes Kraftfahrzeug erfasst werden kann, erfolgt. Aus diesem Grund wird für die Radarsensoren, sofern sie hinter dem Stoßfänger angeordnet sind, eine Öffnung in dem Stoßfänger ausgespart. Alternativ kann der Stoßfänger oder jede andere als Radom funktionierende Abdeckung aus Kunststoff gefertigt sein und die Dicke des Kunststoffs gleich einem Vielfachen der halben Wellenlänge der elektromagnetischen Strahlung des Radarsensors gewählt werden, so dass das Radom für den Radarsensor unsichtbar ist und so die Dämpfung minimiert wird. Als Wellenlänge wird dabei stets die Wellenlänge im Material verstanden. Dieses Vorgehen funktioniert allerdings bei einer Vielzahl an Lacken, die auf dem Stoßfänger wie auch auf dem restlichen Gehäuse des Fahrzeugs anzubringen sind, nicht.

Die Druckschrift JP 57-065006A offenbart ein Radom mit einem dielektrischen Träger, der an der Außen- und der Innenseite mit einer Beschichtung versehen ist. In der außenliegenden Beschichtung sind Metalldrähte, die zur Beheizung des Radoms bestromt werden können, eingebettet.

Ein Radom mit integrierten Heiz- und und Impedanzanpassungselementen ist aus der Druckschrift EP 0478852 A bekannt. Das Radom wird hierbei aus einer dielektrischen Platte gebildet, an der Leiter gemäß einem gewissen Muster angeordnet sind, so dass das Radom mit den daran angeordneten Leitern insgesamt einen niedrigeren Reflexionskoeffizienten für die elektromagnetischen Wellen der Antenne aufweist. Die Leiter können zum Heizen des Radoms genutzt werden.

Die Druckschrift US 3560986 A offenbart ein Radom für eine Radarantenne, das eine ungerade Zahl von dielektrischen Schichten aufweist. Hierbei wechseln sich Schichten mit hoher und niedriger Dielektrizitätskonstante ab und in den Schichten mit hoher Dielektrizitätskonstante sind elektrische Leiter eingebettet. Die Schichten mit niedriger Dielektrizitätskonstante haben eine Dicke von ungefähr einem Viertel der Wellenlänge der durch die Radomstruktur abzustrahlenden elektromagnetischen Strahlung. Die Schichten mit niedriger Dielektrizitätskonstante sind demgegenüber dünner.

Eine Sensorabdeckung, die beispielsweise zur Abdeckung eines Radarsensors genutzt werden kann, ist aus der Druckschrift US 2003/0128164 A1 bekannt. Die Abdeckung wird durch ein Substrat gebildet, das signaldurchlässige und nicht signaldurchlässige Abschnitte aufweist. Auf den nicht signaldurchlässigen Abschnitten ist eine Metallschicht aufgebracht.

Die Erfindung hat damit die Aufgabe, ein Radom anzugeben, das aus beliebigen Schichten aufgebaut sein kann, und das trotzdem die Funktionalität des Radarsensors zumindest nicht wesentlich einschränkt.

Zur Lösung der Aufgabe ist bei einem Radom der eingangs genannten Art vorgesehen, dass die Wand des Radoms aus mehreren Schichten besteht, wobei zwei Schichten aus Kunststoff und wenigstens eine auf der Außenseite des Radoms aufgebrachte Lackschicht aus wenigstens einem Lack besteht, wobei zwischen den Kunststoffschichten wenigstens eine induktiv oder kapazitiv wirkende Vorrichtung angeordnet ist, welche die von der Lackschicht hervorgerufene Reflexion der elektromagnetischen Strahlung des Radarsensors wenigstens teilweise kompensiert, wobei die wenigstens eine induktiv oder kapazitiv wirkende Vorrichtung zum Heizen des Radoms mit Strom beaufschlagbar ist, wobei die Dicke der die Lackschicht tragenden Kunststoffschicht der halben Wellenlänge der elektromagnetischen Strahlung des Radarsensors in dieser Kunststoffschicht entspricht und die Dicke der weiteren Kunststoffschicht im Wesentlichen der halben Wellenlänge bzw. einem Vielfachen der halben Wellenlänge der elektromagnetischen Strahlung des Radarsensors in der weiteren Kunststoffschicht entspricht, oder wobei die die Lackschicht tragende Kunststoffschicht eine derart geringe Dicke aufweist, dass sie die Lackschicht unter Minimierung der Dämpfung der elektromagnetischen Wellen des Radarsensors gerade noch trägt, und die Dicke der weiteren Kunststoffschicht im Wesentlichen einem Vielfachen der halben Wellenlänge der elektromagnetischen Strahlung des Radarsensors in der weiteren Kunststoffschicht entspricht.

Betrachtet man die vom Radarsensor ausgesandten Wellen als ebene Wellen, kann die Wellenausbreitung in homogenen Medien anhand von Leitungsersatzschaltbildern beschrieben werden. Die Schichten des Radoms können dann als Serienschaltung einer Vielzahl von kurzen Leitungsstücken modelliert werden. Unter den Voraussetzungen, dass die elektromagnetische Welle senkrecht auf das Radom trifft und dass das Material des Radoms nichtmagnetisch ist, können die Leitungsstücke über ihren Leitungswiderstand $Z_L$ charakterisiert werden, der wie in der folgenden Gleichung 1 definiert ist:

$$Z_L = \frac{Z_0}{\sqrt{\varepsilon_r}}$$

$Z_0$ ist dabei der Freiraumwellenwiderstand und $\varepsilon_r$ die relative Dielektrizitätszahl des Materials. Im einfachsten Fall bewegt sich die elektromagnetische Strahlung also erst durch Luft, dann durch eine Kunststoffschicht, auf die eine Lackschicht folgt, um sich am Schluss wieder in Luft zu bewegen. Zur optimalen Betriebsweise des Radarsensors sollte im gesamten Modell Leistungsanpassung und somit Reflexionsfreiheit vorliegen. Hierzu muss im Ersatzschaltbild an jeder Stelle eine konjugiert komplexe Anpassung vorliegen, was bedeutet, dass die Realanteile der Impedanzen gleich und der Imaginärteil durch einen entgegengesetzten gleichgroßen Wert auf 0 kompensiert sein müssen.

In der folgenden Betrachtung wird der Freiraumwiderstand vor und hinter dem Radom mit $Z_0$ bezeichnet, die Impedanz am Übergang von der Luft zum Lack mit $Z_1$ und die Impedanz am Übergang von Lack zu Kunststoff mit $Z_2$. Die Kunststoffschicht bewirkt eine Impedanztransformation, die sich gemäß Gleichung 2 berechnen lässt:

$$Z_2 = Z_{L2} \frac{Z_0 + jZ_{L2}\tan(k_2 l_2)}{Z_{L2} + jZ_0 \tan(k_2 l_2)}$$

wobei $k_2$ die Wellenzahl der Leitung, $l_2$ die Länge der Leitung, $Z_{L2}$ die Leitungsimpedanz und $Z_2$ die transformierte Impedanz bezeichnen. Wird, wie es üblicherweise geschieht, die Dicke der Kunststoffschicht als ein Vielfaches der halben Wellenlänge im Material gewählt, ist die transformierte Impedanz gleich dem Freiraumwiderstand:

$$Z_2 = Z_0 \ .$$

Die Lackschicht bewirkt eine weitere Impedanztransformation, die sich analog zu Gleichung 2 ergibt (Gleichung 3):

$$Z_1 = Z_{L1} \frac{Z_0 + jZ_{L1}\tan(k_1 l_1)}{Z_{L1} + jZ_0 \tan(k_1 l_1)} \ .$$

Entspräche die Dicke der Lackschicht ebenfalls einem Vielfachen der halben Wellenlänge im Material, wäre diese Schicht ebenfalls reflexionsfrei an den Freiraumwiderstand angepasst. In der Realität handelt es sich allerdings um sehr dünne Lackschichten, weshalb die transformierte Impedanz $Z_1$ nicht dem Freiraumwiderstand $Z_0$ entspricht. Im Fall sehr dünner Lackschichten ist der Term $Z_{L1} * \tan(k_1 l_1)$ sehr klein gegenüber dem Freiraumwiderstand $Z_0$ und kann somit näherungsweise vernachlässigt werden, wodurch sich Gleichung 3 wie in der folgenden Gleichung 4 vereinfach lässt:

$$Z_1 \approx \frac{Z_0}{1 + j\frac{Z_0}{Z_{L1}}\tan(k_1 l_1)}$$

Der Ersatzwiderstand einer Parallelschaltung aus einer Kapazität C und einem Widerstand R lautet gemäß Gleichung 5:

$$Z = \frac{R}{1 + j\omega RC} \ .$$

Durch Vergleich von Gleichung 4 und Gleichung 5 erkennt man, dass die Lackschicht annähernd als Kapazität betrachtet werden kann. Diese kann dementsprechend durch eine induktiv wirkende Vorrichtung zumindest teilweise kompensiert werden. Dies gelingt umso besser, je kürzer die Leitung und damit kleiner $l_1$ ist, da anderenfalls die Annahme der Vernachlässigung wie oben beschrieben nicht mehr zutrifft.

Bei Schichtdicken größer als $\frac{1}{4}\dfrac{\lambda_0}{\sqrt{\varepsilon_r}}$ wirkt die Lackschicht kapazitiv, weshalb sie durch eine induktiv wirkende Vorrichtung zu kompensieren ist.

Entspricht die Dicke der Kunststoffschicht einem Vielfachen der halben Wellenlänge im Material, so spielt sie elektrisch gesehen keine Rolle, weshalb die induktiv oder kapazitiv wirkende Vorrichtung auch auf der lackschichtabgewandten Seite der Kunststoffschicht angebracht werden kann.

Mit besonderem Vorteil kann die wenigstens eine induktiv oder kapazitiv wirkende Vorrichtung als ein oder mehrere Leitungsstreifen ausgebildet sein. Solche Leitungsstreifen wirken induktiv und können daher im Falle dünner Lackschichten verwendet werden. Vorzugsweise kann im Falle wenigstens zweier Leitungsstreifen deren Breite und Abstand in Abhängigkeit des Freiraumwiderstands zwischen Radarsensor und Wand des Radoms sowie der Impedanz der Wand des Radoms gewählt werden. Näherungsweise kann diese Bestimmung gemäß Gleichung 6 vorgenommen werden:

$$\frac{X}{Z_0} = \frac{a}{\lambda_0}\ln\left(\csc\frac{\pi d}{2a}\right),$$

wobei X die Reaktanz der Wand, $Z_0$ den Freiraumwellenwiderstand, $\lambda_0$ die Freiraumwellenlänge, a den Abstand der Leitungsstreifen und d die Breite der Leitungsstreifen bezeichnet. Im Fall größerer Abstände der Leitungsstreifen kann auch Gleichung 7 mit weiteren Korrekturtermen verwendet werden:

$$\frac{X}{Z_0} = \frac{a}{\lambda_0}\left[\ln\left(\csc\frac{\pi d}{2a}\right) + \frac{Q_2\cos^4\frac{\pi d}{2a}}{1+Q_2\sin^4\frac{\pi d}{2a}} + \frac{1}{16}\left(\frac{a}{\lambda_0}\right)^2\left(1-3\sin^2\frac{\pi d}{2a}\right)^2\cos^4\frac{\pi d}{2a}\right]$$

mit

$$Q_2 = \frac{1}{\sqrt{1-\left(\dfrac{a}{\lambda_0}\right)^2}} - 1$$

Mit besonderem Vorteil kann der wenigstens eine Leitungsstreifen im Wesentlichen parallel zum elektrischen Feldvektor der durch den Radarsensor erzeugten elektromagnetischen Strahlung angeordnet sein. Die Wirkung der Leitungsstreifen hängt nämlich auch von ihrer Stellung bezüglich des elektrischen Feldvektors ab und durch die parallele Ausrichtung kann eine maximale Wirkung erzielt werden.

Alternativ kann der wenigstens eine Leitungsstreifen wellenförmig und in der Hauptachse im Wesentlichen parallel zum elektrischen Feldvektor der durch den Radarsensor erzeugten elektromagnetischen Strahlung angeordnet sein. Entscheidend ist demnach, dass die Hauptachse des Leitungsstreifens parallel zum elektrischen Feldvektor ist, während eine vollständig gerade Ausführungsform nicht zwingend notwendig ist, wodurch Freiheiten in der optischen Gestaltung verbleiben.

Ein weiteres bekanntes Problem mit Radarsensoren bzw. deren Radomen ist ein mögliches Erblinden des Radarsensors durch auf dem Radom aufliegenden Schnee, Schneematsch oder Eis. In diesem Fall kann die wenigstens eine induktiv oder kapazitiv wirkende Vorrichtung zum Heizen des Radoms mit Strom beaufschlagbar sein. Die Vorrichtung erfüllt in diesem Fall eine Doppelfunktion, während das Heizen bzw. das Beaufschlagen mit Strom keinerlei negativen Einfluss hinsichtlich der kapazitiven bzw. induktiven Wirkung der Vorrichtung hat. Dies erlaubt eine besonders kompakte Bauweise des Radoms.

Wie oben bereits ausgeführt, ist die Kunststoffschicht für die elektromagnetische Strahlung genau dann in elektrischer Hinsicht unsichtbar, wenn die Dicke der Kunststoffschicht der Wand des Radoms im Wesentlichen einem Vielfachen der halben Wellenlänge der elektromagnetischen Wellen in der Kunststoffschicht entspricht. Vorzugsweise ist die Dicke dementsprechend gewählt, wobei mit besonderem Vorteil die Dicke im Wesentlichen einer ganzen Wellenlänge entspricht. Aus elektrischer Sicht gesehen ist es unerheblich, ob die Dicke der Wand einem halben einer ganzen oder einem anderen Vielfachen der halben Wellenlänge der elektromagnetischen Wellen entspricht. Im Falle einer Frequenz von beispielsweise 76,5 GHz entspricht die Wellenlänge im Material einer Dicke von ca. 2,3 mm und die Wellenlänge in Luft ist 3,9 mm. Diese Größert gelten für $\varepsilon_r$ = 2,8, wobei die Wellenlänge im Material $\lambda_{Mat}$ und die

Freiraumwellenlänge $\lambda_0$ über $\lambda_{Mat} = \dfrac{\lambda_0}{\sqrt{\varepsilon_r}}$ verknüpft sind.

Mit besonderem Vorteil kann die induktiv oder kapazitiv wirkende Vorrichtung auf der dem Radarsensor zugewandten Seite des Radoms angeordnet sein. Prinzipiell kann die Vorrichtung auf der Außenseite, zwischen den wenigstens zwei Schichten oder auf der Innenseite, also der dem Radarsensor zugewandten Seite, angeordnet sein, da die Kunststoffschicht nicht elektrisch wirksam ausgelegt ist. Aus optischen Gründen ist daher eine Anordnung auf der Innenseite des Kraftfahrzeugs zu bevorzugen, da die elektrische Vorrichtung dann unsichtbar für einen Betrachter angeordnet ist.

Statt wie oben beschrieben die Dicke gleich einer ganzen Wellenlänge der elektromagnetischen Strahlung im Material zu wählen, kann auch vorgesehen sein, dass die Dicke im Wesentlichen einer halben Wellenlänge entspricht und eine weitere Kunststoffschicht auf der Kraftfahrzeuginnenseite angeordnet ist, deren Dicke im Wesentlichen einem Vielfachen der halben Wellenlänge der elektromagnetischen Wellen in der weiteren Kunststoffschicht entspricht. Auf die Lackschicht, die Kunststoffschicht und die Leiterbahnen folgt also eine weitere Kunststoffschicht. Die Ausgestaltungen der zwischen Lackschicht und Leiterbahnen befindlichen Kunststoffschicht in der Form, dass als Dicke genau eine halbe Wellenlänge gewählt wird und somit die kleinstmögliche Dicke, weist den Vorteil auf, dass die Dämpfung auch für Frequenzen, die nicht genau der halben Wellenlänge im Material entsprechen, gering ist. Die nach der Leistungsanpassung durch die Leiterbahnen auftretenden Strukturen in Form der weiteren Wand sind diesbezüglich unkritischer wie die Kunststoffschicht, die direkt auf die Lackschicht und noch vor der Leistungsanpassung durch die Leiterbahnen folgt. Die weitere Wand wird dann aus Stabilitätsgründen erforderlich, da die Dicke der Kunststoffschicht für ein $\varepsilon_r$ von 2,8 dann lediglich ca. 1,1 mm dick ist, wodurch die Stabilität des Radoms nicht gewährleistet werden kann. Da, wie eben bereits ausgeführt, die Anpassung der Wanddicke auf ein Vielfaches einer halben Wellenlänge immer lediglich für eine einzige Frequenz erreicht werden kann, weist auch die weitere Wand eine möglichst geringe Dicke auf, also optimalerweise ebenfalls die Dicke einer halben Wellenlänge der elektromagnetischen Strahlung im Material. Besteht die weitere Wand aus dem gleichen Material wie die Kunststoffschicht, sind die Leiterbahnen von zwei identischen Schichten bzw. Wänden umgeben.

In Alternative zu der eben ausgeführten Ausgestaltung ist es auch möglich, dass die Kunststoffschicht eine derart geringe Dicke aufweist, dass sie die Lackschicht unter Minimierung der Dämpfung der elektromagnetischen Wellen des Radarsensors noch trägt, dass die induktiv oder kapazitiv wirkende Vorrichtung auf der Kraftfahrzeuginnenseite angeordnet ist und nach dieser eine weitere Kunststoffschicht angeordnet ist, deren Dicke im Wesentlichen einem Vielfachen der halben Wellenlänge der elektromagnetischen Wellen in der weiteren Kunststoffschicht entspricht. Die Dämpfung der auf die Lackschicht folgende Kunststoffschicht wird also nicht durch die Anpassung der Dicke an ein Vielfaches von $\lambda/2$ erreicht, sondern durch die Minimierung der Dicke. Hierbei muss die Kunststoffschicht allerdings noch das Auftragen der Lackschicht erlauben, ohne dadurch zerstört oder beschädigt zu werden. Durch die dann folgende elektrisch wirksame Vorrichtung wird die durch die Lackschicht hervorgerufene Dämpfung minimiert, während die daran folgende weitere Kunststoffschicht die Stabilität des Radoms gewährleistet. Insbesondere für breitbandige Radarsensoren ist diese Anordnung interessant, da die weitere Kunststoffschicht bei dieser Anordnung wie auch bei der eben oben genannten Ausgestaltung Frequenzen, deren Wellenlängen nicht genau der Wellenlänge entsprechen, für die die Wanddicke der weiteren Kunststoffschicht optimiert wurde, weniger stark dämpft.

Mit besonderem Vorteil kann das Radom in den Stoßfänger eines Kraftfahrzeugs integriert sein. Unter Integration wird einerseits verstanden, dass das Radom als separates Teil oder als separater Abschnitt in einen ansonsten nach Stand der Technik bekannten Stoßfänger in einen Abschnitt oder Teilbereich eingefügt wird. Andererseits kann der Stoßfänger selbst das Radom darstellen. Dabei ist dann der Stoßfänger lediglich auf der Fahrzeuginnenseite mit induktiv oder kapazitiv wirkenden Vorrichtungen zu versehen, um als Radom einsetzbar zu sein. Andererseits kann in einen Stoßfänger, der mit Aussparungen versehen war, eine lackierte Kunststoffkappe eingesetzt werden, um die Aussparungen abzudecken. In diesem Fall ist dann lediglich die Abdeckung mit den elektrisch wirksamen Vorrichtungen ausgestattet.

Daneben betrifft die Erfindung auch einen Radarsensor sowie ein Kraftfahrzeug.

Weitere Vorteile, Merkmale und Einzelheiten der Erfindung ergeben sich aus den im Folgenden beschriebenen Ausführungsbeispielen sowie anhand der Zeichnungen. Dabei zeigen:

Fig. 1    die Teilansicht eines erfindungsgemäßen Radoms,

Fig. 2    das Ersatzschaltbild des Radoms nach Fig. 1

Fig. 3    eine alternative Ausgestaltung eines erfindungsgemäßen Radoms, und

Fig. 4    ein Radom nach Stand der Technik, und

Fig. 5    das Ersatzschaltbild des Radoms nach Fig. 4, und

Fig. 6    ein Kraftfahrzeug mit Stoßfänger in der Querschnittsansicht, und

Fig. 7    ein Radom in einer weiteren Ausgestaltung

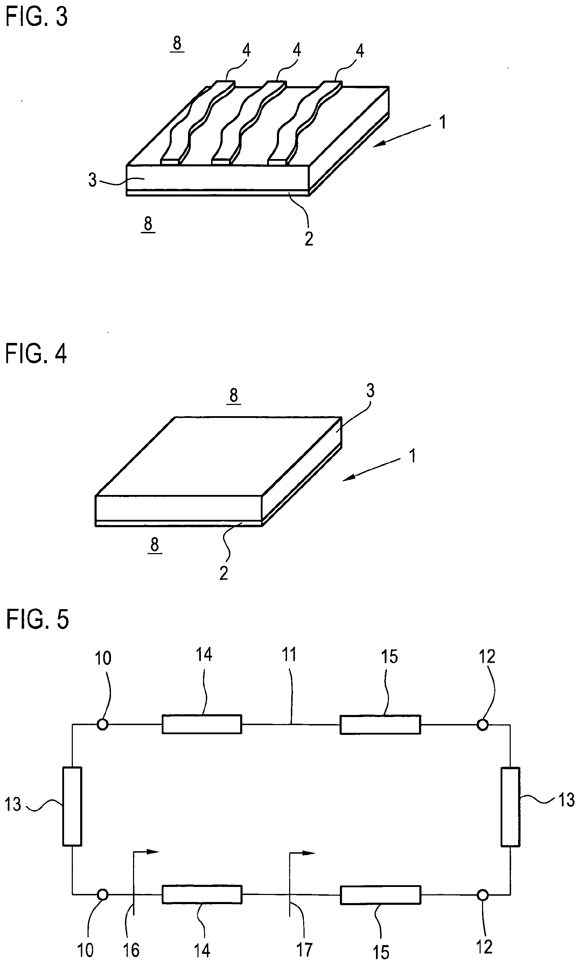

Fig. 4 zeigt ein bekanntes Radom 1, bestehend aus einer Lackschicht 2 und einer Kunststoffschicht 3. Auf der Kraftfahrzeuginnen- wie auch -außenseite befindet sich Luft 8. Im Ersatzschaltbild in Fig. 5 wird die Luft 8 über den Freiraumwiderstand 13 wiedergegeben, während die Leitung 14 die Lackschicht und die Leitung 15 die Kunststoffschicht darstellen. Die transformierten Impedanzen 16 und 17 ergeben sich gemäß den Gleichungen 2 und 3. Im Falle einer dünnen Lackschicht, wobei "dünn" von der relativen Dielektrizitätskonstante $\varepsilon_r$ abhängt und für $\varepsilon_r$ gleich 100 in einer Größenordnung von einigen Mikrometern bis zu etwa 0,1 mm liegt, kann die transformierte Impedanz 16 auch gemäß Gleichung 4 angegeben werden. In diesem Fall wirkt die Lackschicht 2 kapazitiv und kann durch eine induktive Vorrichtung zumindest teilweise kompensiert werden. Für kleiner Dielektrizitätskonstanten $\varepsilon_r$ können die Schichtdicken entsprechend größer sein.

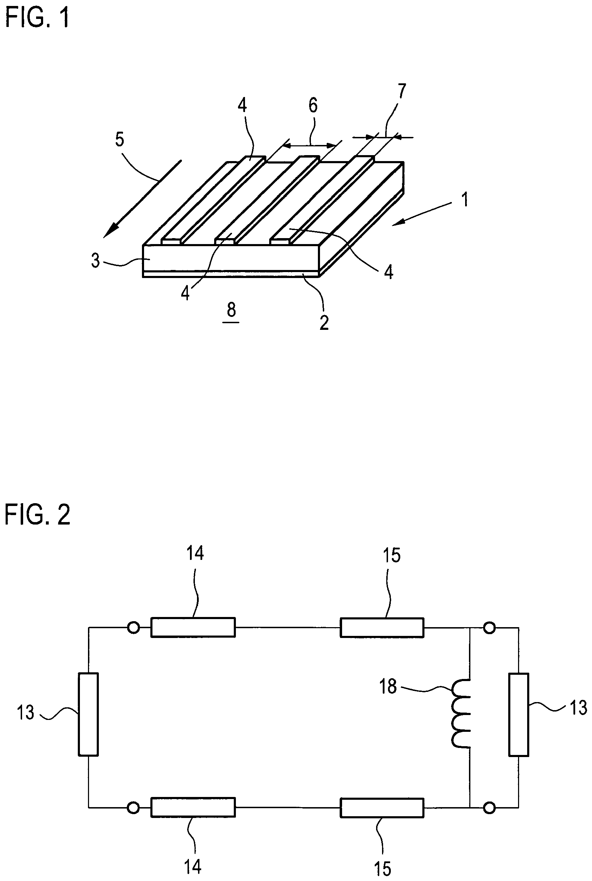

Eine derartige induktive Vorrichtung ist in Fig. 1 in Form der Leiterbahnen 4 zu sehen. Die Leiterbahnen sind parallel zum elektrischen Feldvektor 5 der elektromagnetischen Strahlung ausgerichtet und befinden sich auf der Kraftfahrzeuginnenseite. Dies ist möglich, da die Dicke der Kunststoffschicht 3 der Wellenlänge der elektromagnetischen Strahlung im Material entspricht und sie somit elektrisch nicht wirksam ist. Im Ersatzschaltbild in Fig. 2 werden die Leiterbahnen 4 durch die Induktivität 18 repräsentiert, ansonsten entsprechen sich Fig. 2 und Fig. 5. Der Abstand 6 und die Breite 7 der Leiterbahnen ergeben sich gemäß einer der Gleichungen 6 oder 7, abhängig von dem Abstand 6 der Leiterbahnen 4.

In einer alternativen Ausgestaltung können die Leiterbahnen 4 auch wellenförmig verlaufen, wobei die Hauptachse weiterhin parallel zum Feldvektor 5 der elektromagnetischen Strahlung verbleibt, siehe Fig. 3. Hierbei sind auch weitere Ausgestaltungen beispielsweise in Form einer Dreiecklinie denkbar. Durch Verbindung der Leiterbahnen 4 mit einer Stromquelle können diese mit Strom beaufschlagt werden, um das Radom zu beheizen. Dies ist besonders vorteilhaft, um eventuell auf der Fahrzeugaußenseite auftretende Eisschichten zu verhindern.

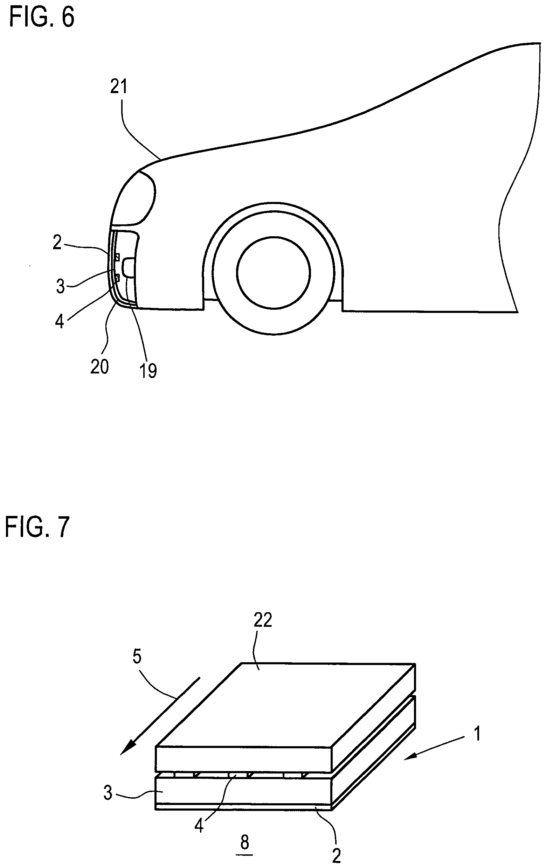

Fig. 6 zeigt den Vorderbereich eines Kraftfahrzeugs 21 in einer Querschnittsansicht, wobei der Radarsensor 19 hinter dem Stoßfänger 20 angeordnet ist. Vorteilhafterweise kann in dieser Ausgestaltung der Stoßfänger 20 als Radom 5 fungieren, da auf der Kraftfahrzeuginnenseite Leiterbahnen 4 angebracht sind, die den Betrieb des Radarsensors 19 hinter dem lackierten Stoßfänger 20 erlauben. Der Stoßfänger selbst ist aus einer Kunststoffschicht 3 und einer Lackschicht 2 aufgebaut, wobei die Lackschicht 2 selbst wiederum aus mehreren Schichten wie der Grundierungsschicht und der eigentlichen Farbschicht aufgebaut ist. Aufgrund der Leiterbahnen 4 auf der Fahrzeuginnenseite des Stoßfängers 20 ist es möglich, den Radarsensor 19 hinter dem Stoßfänger zu platzieren, ohne dass in diesem eine Aussparung vorzusehen wäre, die optisch nachteilig wirkt. Da der Stoßfänger die gesamte Breite des Kraftfahrzeugs 21 umfasst, kann der Radarsensor 19 des Weiteren von der vertikalen Ausrichtung her gesehen an beliebiger Position angebracht werden. Durch das erfindungsgemäße Radom stehen also insbesondere im Frontbereich eines Kraftfahrzeugs 21 mehr Möglichkeiten zum Einbau des Radarsensors 19 zur Verfügung, ohne dass hierdurch die optischen Gestaltungsfreiräume eingegrenzt würden.

Fig. 7 zeigt ein Radom 1, das auf der Fahrzeuginnenseite eine weitere Kunststoffschicht 22 aufweist. Die Dicke der Kunststoffschicht 3 entspricht einer halben Wellenlänge der elektromagnetischen Strahlung im Material, also der kleinstmöglichen Dicke. Hierdurch kann die Dämpfung von Frequenzen, deren halbe Wellenlänge leicht von der Dicke der Kunststoffschicht 3 abweicht, minimiert werden. Alternativ ist es möglich, die Dicke der Kunststoffschicht 3 so "dünn" zu wählen, dass sie das Auftragen der Lackschicht 3 gerade noch erlaubt und durch diese Ausformung die elektromagnetischen Wellen nur minimal dämpft. Aufgrund der Dicke der Kunststoffschicht 3 ist in beiden Fällen die Stabilität des Radoms 1 verringert oder sogar nicht mehr vorhanden. Daher folgt auf die Leiterbahnen 4 Richtung Kraftfahrzeuginnenseite eine weitere Kunststoffschicht 22, um die Stabilität des Radoms 1 wieder zu erhöhen. Die Dicke der Kunststoffschicht 22 muss zur Minimierung der Dämpfung ebenfalls einem Vielfachen der halben Wellenlänge der elektromagnetischen Strahlung im Material entsprechen, wobei hier zur Minimierung von Dämpfungsverlusten ebenfalls die Mindestdicke, die also einer halben Wellenlänge entspricht, zu wählen ist. Im Material kann sie der Kunststoffschicht 3 entsprechen, aber auch aus einem anderen Kunststoff bestehen. Da aufgrund der Leiterbahnen 4 aber bereits eine Leistungsanpassung erfolgt ist, bewirkt eine Gesamtanordnung aus Kunststoffschicht 3 und weiterer Kunststoffschicht 22 eine geringere Dämpfung, als eine vergleichbare, dickere Kunststoffschicht 3. Diese Ausgestaltung ist insbesondere für breitbandige Radarsensoren vorteilhaft.

**Patentansprüche**

1.  Radom für einen Radarsensor (19) in einem Kraftfahrzeug (21), wobei die Wand des Radoms (1) aus mehreren Schichten besteht, wobei zwei Schichten (3, 22) aus Kunststoff und wenigstens eine auf der Außenseite des Radoms (1) aufgebrachte Lackschicht (2) aus wenigstens einem Lack besteht, wobei zwischen den Kunststoffschichten (3, 22) wenigstens eine induktiv oder kapazitiv wirkende Vorrichtung angeordnet ist, welche die von der Lackschicht (2) hervorgerufene Reflexion der elektromagnetischen Strahlung des Radarsensors (19) wenigstens teilweise kompensiert, wobei die wenigstens eine induktiv oder kapazitiv wirkende Vorrichtung zum Heizen des Radoms (1) mit Strom beaufschlagbar ist, wobei die Dicke der die Lackschicht (2) tragenden Kunststoffschicht (3) der halben Wellenlänge der elektromagnetischen Strahlung des Radarsensors (19) in dieser Kunststoffschicht (3) entspricht und die Dicke der weiteren Kunststoffschicht (22) im Wesentlichen der halben Wellenlänge bzw. einem Vielfachen der halben Wellenlänge der elektromagnetischen Strahlung des Radarsensors (9) in der weiteren Kunststoffschicht (22) entspricht, oder wobei die die Lackschicht (2) tragende Kunststoffschicht (3) eine derart geringe Dicke aufweist, dass sie die Lackschicht (2) unter Minimierung der Dämpfung der elektromagnetischen Wellen des Radarsensors (19) gerade noch trägt, und die Dicke der weiteren Kunststoffschicht (22) im Wesentlichen einem Vielfachen der halben Wellenlänge der elektromagnetischen Strahlung des Radarsensors (19) in der weiteren Kunststoffschicht (22) entspricht.

2.  Radom nach Anspruch 1,
    wobei die wenigstens eine induktiv oder kapazitiv wirkende Vorrichtung als ein oder mehrere Leitungsstreifen (4) ausgebildet ist.

3.  Radom nach Anspruch 2,
    wobei im Falle wenigstens zweier Leitungsstreifen (4) deren Breite (7) und Abstand (6) in Abhängigkeit des Freiraumwiderstands (13) zwischen Radarsensor (19) und Wand des Radoms (1) sowie der Reaktanz der Wand des Radoms (1) gewählt ist.

4.  Radom nach einem der Ansprüche 2 oder 3,
    wobei der wenigstens eine Leitungsstreifen (4) im Wesentlichen parallel zum elektrischen Feldvektor (5) der durch den Radarsensor (19) erzeugten elektromagnetischen Strahlung angeordnet ist.

5.  Radom nach einem der Ansprüche 2 oder 3,
    wobei der wenigstens eine Leitungsstreifen (4) wellenförmig und in der Hauptachse im Wesentlichen parallel zum elektrischen Feldvektor (5) der durch den Radarsensor (19) erzeugten elektromagnetischen Strahlung angeordnet ist.

6.  Radom nach einem der vorangehenden Ansprüche,
    wobei die Dicke der weiteren Kunststoffschicht (22) im Wesentlichen einer ganzen Wellenlänge entspricht.

7.  Radarsensor (19) mit einem zugeordneten Radom (1) nach einem der vorangehenden Ansprüche.

8.  Kraftfahrzeug (21) mit einem Radom (1) nach einem der Ansprüche 1 bis 6 oder mit einem Radarsensor (19) nach Anspruch 7.

9.  Kraftfahrzeug nach Anspruch 8, wobei das Radom (1) in den Stoßfänger (20) des Kraftfahrzeugs integriert ist.

**Claims**

1.  Radome for a radar sensor (19) in a vehicle (21), wherein the wall of the radome (1) consists of a plurality of layers, wherein two layers (3, 22) consists of plastic and at least one lacquer layer (2) applied to the outer side of the radome (1) consists of at least one lacquer, wherein between the plastic layers (3, 22) is disposed at least one inductively or capacitively functioning device, which at least partially compensates the reflection of the electromagnetic radiation of the radar sensor (19) caused by the lacquer layer (2), wherein the at least one inductively or capacitively functioning device can be supplied with electricity for heating the radome (1), wherein the thickness of the plastic layer (3) bearing the lacquer layer (2) is equal to the half wavelength of the electromagnetic radiation of the radar sensor (19) in this plastic layer (3) and the thickness of the further plastic layer (22) is substantially equal to the half wavelength or a multiple of the half wavelength of the electromagnetic radiation of the radar sensor (9) in the further plastic layer (22), or wherein the plastic layer (3) bearing the lacquer layer (2) has a low thickness such that it only just supports the lacquer layer (2) while minimising the damping of the electromagnetic waves of the radar sensor (19), and the thickness of the further plastic layer (22) is substantially equal to a multiple of the half wavelength of the electromagnetic radiation of the radar sensor (19) in the further plastic layer (22).

2. Radome according to claim 1, wherein the at least one inductively or capacitively functioning device is formed as one conductor strip (4) or a plurality of conductor strips.

3. Radome according to claim 2, wherein in the case of at least two conductor strips (4) their breadth (7) and spacing (6) is selected depending on the clearance resistance (13) between radar sensor (19) and wall of the radome (1) and the reactance of the wall of the radome (1).

4. Radome according to one of claims 2 or 3, wherein the at least one conductor strip (4) is disposed substantially parallel to the electrical field vector (5) of the electromagnetic radiation generated by the radar sensor (19).

5. Radome according to one of claims 2 or 3, wherein the at least one conductor strip (4) is wave-shaped and disposed in main axis substantially parallel to the electrical field vector (5) of the electromagnetic radiation generated by the radar sensor (19).

6. Radome according to one of the preceding claims, wherein the thickness of the further plastic layer (22) is substantially equal to a whole wavelength.

7. Radar sensor (19) with an associated radome (1) according to one of the preceding claims.

8. Vehicle (21) with a radome (1) according to one of claims 1 to 6 or with a radar sensor (19) according to claim 7.

9. Vehicle according to claim 8, wherein the radome (1) is integrated in the bumper (20) of the vehicle.

**Revendications**

1. Radôme pour un capteur radar (19) dans un véhicule automobile (21), dans lequel la paroi du radôme (1) se compose de plusieurs couches, dans lequel deux couches (3, 22) se composent de matière plastique et au moins une couche de vernis (2) appliquée sur le côté extérieur du radôme (1) se compose d'au moins un vernis, dans lequel au moins un dispositif agissant par voie inductive ou capacitive est disposé entre les couches de matière plastique (3, 22), lequel compense au moins partiellement la réflexion suscitée par la couche de vernis (2) du rayonnement électromagnétique du capteur radar (19), dans lequel l'au moins un dispositif agissant par voie inductive ou capacitive peut être alimenté en courant pour le chauffage du radôme (1), dans lequel l'épaisseur de la couche de matière plastique (3) portant la couche de vernis (2) correspond à la demi-longueur d'onde du rayonnement électromagnétique du capteur radar (19) dans cette couche de matière plastique (3) et l'épaisseur de l'autre couche de matière plastique (22) correspond sensiblement à la demi-longueur d'onde ou à un multiple de la demi-longueur d'onde du rayonnement électromagnétique du capteur radar (9) dans l'autre couche de matière plastique (22), ou dans lequel la couche de matière plastique (3) portant la couche de vernis (2) présente une épaisseur faible telle qu'elle porte juste encore la couche de vernis (2) sous minimisation de l'amortissement des ondes électromagnétiques du capteur radar (19), et l'épaisseur de l'autre couche de matière plastique (22) correspond sensiblement à un multiple de la demi-longueur d'onde du rayonnement électromagnétique du capteur radar (19) dans l'autre couche de matière plastique (22).

2. Radôme selon la revendication 1,
dans lequel l'au moins un dispositif agissant par voie inductive ou capacitive est réalisé en tant qu'une ou plusieurs bandes conductrices (4).

3. Radôme selon la revendication 2,
dans lequel, dans le cas d'au moins deux bandes conductrices (4), leur largeur (7) et distance (6) sont choisies en fonction de la résistance d'espace libre (13) entre le capteur radar (19) et la paroi du radôme (1) ainsi que la réactance de la paroi du radôme (1).

4. Radôme selon l'une quelconque des revendications 2 ou 3,
dans lequel l'au moins une bande conductrice (4) est disposée sensiblement parallèlement au vecteur de champ électrique (5) du rayonnement électromagnétique généré par le capteur radar (19).

5. Radôme selon l'une quelconque des revendications 2 ou 3,
dans lequel l'au moins une bande conductrice (4) est disposée en forme d'onde et dans l'axe principal sensiblement parallèlement au vecteur de champ électrique (5) du rayonnement électromagnétique généré par le capteur radar (19).

6. Radôme selon l'une quelconque des revendications précédentes,
dans lequel l'épaisseur de l'autre couche de matière plastique (22) correspond sensiblement à une longueur d'onde entière.

7. Capteur radar (19) avec un radôme (1) associé selon l'une quelconque des revendications précédentes.

8. Véhicule automobile (21) avec un radôme (1) selon l'une quelconque des revendications 1 à 6 ou avec un capteur radar (19) selon la revendication 7.

9. Véhicule automobile selon la revendication 8, dans lequel le radôme (1) est intégré dans le pare-chocs (20) du véhicule automobile.

FIG. 1

FIG. 2

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 57065006 A
- EP 0478852 A
- US 3560986 A
- US 20030128164 A1